# EUROPÄISCHE PATENTSCHRIFT

(11) **EP 3 478 439 B1**
(45) Veröffentlichungstag und Bekanntmachung des Hinweises auf die Patenterteilung: **17.06.2020**
(21) Anmeldenummer: 17734292.0
(22) Anmeldetag: 28.06.2017
(51) Int. Cl.: B23K 1/00, B23G 5/00, B23B 51/02, B22F 3/105, B23P 15/28, B23K 26/28, B23K 31/02, B29C 67/00, C21D 9/50, B23K 26/342, B23K 26/323, B23K 101/20

(54) **VERFAHREN ZUR HERSTELLUNG EINES SPANABHEBENDEN SCHNEIDWERKZEUGES DURCH GENERATIVES LASERSCHMELZEN UND LASER-SCHWEISSEN ; ENTSPRECHENDES SPANABHEBENDES SCHNEIDWERKZEUG**
METHOD FOR PRODUCING A MACHINING CUTTING TOOL VIA ADDITIVE LASER MELTING AND LASER WELDING, AND CORRESPONDING MACHINING CUTTING TOOL
PROCÉDÉ DE FABRICATION D'UN OUTIL DE COUPE À ENLÈVEMENT DE COPEAUX PAR FUSION ADDITIVE PAR LASER ET SOUDAGE PAR LASER ; OUTIL DE COUPE À ENLÈVEMENT DE COPEAUX CORRESPONDANT

(30) Priorität: 29.06.2016 DE 102016111934
(43) Veröffentlichungstag der Anmeldung: 08.05.2019
(73) Patentinhaber: Komet Group GmbH, 74354 Besigheim (DE)
(72) Erfinder: SCHMID, Frank, 73779 Deizisau (DE); EDELMANN, Karl-Heinz, 71139 Ehningen (DE)
(74) Vertreter: Pfiz, Thomas
(86) Internationale Anmeldenummer: PCT/EP2017/066044
(87) Internationale Veröffentlichungsnummer: WO 2018/002165

(56) Entgegenhaltungen:
- US-A- 5 066 170
- US-A1- 2005 112 230
- US-A1- 2005 133 487
- US-A1- 2014 321 931
- US-B1- 6 209 420

## Beschreibung

Die Erfindung betrifft ein Verfahren zur Herstellung eines spanabhebenden Schneidwerkzeugs, und ein spanabhebendes Schneidwerkzeug, siehe Ansprüche 1 und 13.

US 2005 13 487 A1 (Stand der Technik) offenbart ein spanabhebendes Werkzeug und seine Herstellung. Dieses Werkzeug weist einen durch Trennen, insbesondere Spanen in seine Endform gebrachten Grundkörper, der eine Schnittstelle (20) zur Aufnahme in einer Werkzeugmaschine aufweist, und einen Schneidenträger, der mit Schneidelemente versehen ist, auf. Der Schneidenträger ist mit dem Grundkörper an einer Fügestelle durch eine Laserschweißverbindung fest verbunden. Schneidwerkzeug.

Für die spanende Bearbeitung, insbesondere die Bearbeitung von Metall, aber auch von Kunst-, Faser- und Verbundstoffen, haben sich Maschinenwerkzeuge mit besonderen Schneidelementen bewährt. Diese kommen am Arbeitsende des Werkzeugs auf einem Schneidenträger zum Einsatz, über den auch die Kühlmittelzufuhr und Spanableitung erfolgt. In diesem Zusammenhang ist es bereits bekannt, den Grundkörper für das Schneidwerkzeug mit einfacher Geometrie aus einem kostengünstigen Werkzeugstahl konventionell und den geometrisch anspruchsvolleren Schneidenträger aus höherwertigem Material additiv herzustellen. Dabei wird auf eine ebene Stirnfläche des Grundkörpers der Schneidenträger schichtweise aufgebaut. Bei diesem direkten Hybridbau werden Werkstoffe unterschiedlicher chemischer Zusammensetzung stoffschlüssig miteinander verbunden, wodurch innere Spannungen in dem Gebilde entstehen können. Dies kann soweit führen, dass sich Risse im Gefüge bilden. Im schlechtesten Fall löst sich das additiv generierte Bauteil während der Herstellung ab. Der Herstellvorgang wird unterbrochen, das Bauteil ist zerstört, und zumeist entsteht auch ein Schaden an der Fertigungsanlage.

Ausgehend hiervon liegt der Erfindung die Aufgabe zugrunde, die im Stand der Technik bekannten Maschinenwerkzeuge zur Vermeidung der vorgenannten Nachteile weiter zu verbessern und eine mit hoher Prozesssicherheit und Qualität herstellbare Hybridkonstruktion anzugeben.

Zur Lösung dieser Aufgabe wird die in den unabhängigen Patentansprüchen 1 und 13 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, additive und subtraktive Verfahren bei der Werkzeugherstellung vorteilhaft zu kombinieren, so dass das generativ zu fertigende Bauteilvolumen stark reduziert werden kann. Dementsprechend wird erfindungsgemäß vorgeschlagen, dass der Schneidenträger separat von dem Grundkörper auf einer Bauplattform generativ vorgefertigt wird, und anschließend der Schneidenträger mit dem subtraktiv gefertigten Grundkörper an einer Fügestelle durch Laserschweißen fest verbunden wird. Durch das Laserschweißen wird vergleichsweise wenig Wärme lokal begrenzt eingetragen. Dadurch werden Spannungen im Bereich der Fügestelle gering gehalten. Die Gefahr, dass sich die Bauteile ungewollt verziehen, wird somit auf ein Mindestmaß reduziert. Außerdem werden keine unkontrollierten Härteprozesse ausgelöst bzw. nachteilige Gefügeveränderungen bewirkt. Durch die formlose Fertigung des Schneidenträgers können anspruchsvolle Topologien realisiert werden.

Vorteilhafterweise wird der Schneidenträger in Verbindung mit dem Grundkörper einer Wärmebehandlung durch Aufheizen auf mindestens 400°C, vorzugsweise etwa 500°C unterzogen. Dadurch kann das Bauteil weitgehend spannungsfrei erhalten werden und ein Härteabfall vermieden werden. Die Standmenge des Werkezugs lässt sich somit verbessern.

Gemäß der Erfindung sind die Schneidelemente auf den Schneidenträger aufgelötet, so dass eine optimierte Spanungsfunktion und eine hohe Standzeit erreicht wird.

In diesem Zusammenhang lässt sich eine weitere Verbesserung dadurch erreichen, dass die mit dem Schneidenträger verbundenen Schneidelemente insbesondere durch Schleifen, Erodieren oder Laserbearbeitung in eine vorgesehene Endform gebracht werden.

Zur Aufnahme hoher Zerspankräfte ist es auch von Vorteil, wenn der Schneidenträger und/oder der Grundkörper mit Formschlusselementen, insbesondere mit einem Bund für einen Formschluss an der Fügestelle versehen werden.

Um das generativ herzustellende Volumen gering zu halten, ist es günstig, wenn der Schneidenträger zumindest in einem dem Grundkörper zugewandten Abschnitt innen hohlzylindrisch ausgebildet wird.

Vorteilhafterweise wird der Schneidenträger im Bereich von einer oder mehreren Schweißebenen mit dem Grundkörper durch Laserschweißen fest verbunden.

Möglich ist es auch, dass beim Laserschweißen an der Fügestelle ein Schweißzusatzwerkstoff hinzugeführt wird. Wenn allerdings die mechanische Beanspruchung des Werkzeugs zulässt, ist eine Schweißung ohne Zuführung von Schweißdraht zu bevorzugen, weil diese kostengünstig mit geringem Rüstaufwand und teilautomatisiert hergestellt werden kann.

Um zusätzlich Funktionalitäten zu schaffen, ist es vorteilhaft, wenn in den Schneidenträger im Zuge der generativen Fertigung mindestens ein Kühlmittelkanal eingeformt wird.

Eine besonders vorteilhafte Ausgestaltung sieht vor, dass eine Vielzahl von Schneidenträgern in einer Losfertigung generativ aufgebaut wird. Dadurch kann die Laserschmelzanlage besser ausgelastet werden und die Herstellkosten der Bauteile werden gesenkt. Die solchermaßen in größeren Losgrößen produzierten Schneidenträger können auch in identischer Ausführung mit verschiedenen Werkzeugtrennstellen verschweißt werden.

Um die Schweißverbindung zu optimieren, ist es möglich, dass beim Laserschweißen ein Laserstrahl entlang einer vorgegebenen Bahn geführt wird oder der Grundkörper zusammen mit dem aufgesetzten Schneidenträger relativ zu einem ortsfesten Laserstrahl gedreht wird.

Vorteilhafterweise wird beim selektiven Laserschmelzen das Pulvermaterial in übereinanderliegenden Schichten auf der Bauplattform aufgebracht und schichtweise in einer vorgegebenen Bauteilgeometrie mittels Laserstrahlung umgeschmolzen.

Die Mischbauweise lässt sich vorteilhaft einsetzen, um ein Schneidwerkzeug ausgewählt aus der Gruppe Fräswerkzeug, Bohrwerkzeug, Aufbohrwerkzeug, Reibwerkzeug herzustellen.

Gegenstand der Erfindung ist auch ein spanabhebendes Schneidwerkzeug gemäß dem Anspruch 13. Dadurch werden die vorgenannten Vorteile in analoger Weise erreicht.

Im Folgenden wird die Erfindung anhand der in der Zeichnung schematisch dargestellten Ausführungsbeispiele näher erläutert. Es zeigen:
- Fig. 1: ein Maschinenfräswerkzeug mit generativ gefertigtem Schneidenträger in Seitenansicht;
- Fig. 2: eine Prinzipdarstellung einer Station zum selektiven Laserschmelzen;
- Fig. 3 - 6: verschiedene Fertigungsschritte des Maschinenfräswerkzeugs Werkzeugs in ausschnittsweiser Vergrößerung der Fig. 1;
- Fig. 7 - 9: verschiedene Varianten der Fügestelle für das Laserschweißen des Werkzeugs nach Fig. 1 in teils aufgebrochener Seitenansicht.

Das in der Zeichnung dargestellte Fräswerkzeug 10 umfasst einen Grundkörper 12 und einen damit an einer Fügestelle 14 fest verbundenen, generativ bzw. additiv gebildeten Schneidenträger 16, der mit mindestens einem Schneidelement 18 versehen ist.

Der Grundkörper 12 besitzt an seinem rückseitigen Abschnitt ein zum Einspannen in eine Werkzeugmaschine geeignetes, an sich bekanntes Spannteil 20, zum Beispiel eine ABS-, HSK- oder Steilkegel-Schnittstelle. Damit lässt sich das Werkzeug um eine Dreh- bzw. Werkzeugachse 22 rotierend antreiben. Der Grundkörper 12 ist konventionell aus einem Werkzeugstahl (z.B. 1.2344 oder 1.7225) gebildet und wird durch Zerspanen in seine gezeigte Endform gebracht.

Der Schneidenträger 16 ist an der Fügestelle 14 über eine Schweißverbindung 24 stoffschlüssig mit dem Grundkörper 12 verbunden. Neben den Plattensitzen 26 für die Schneidelemente 18 sind Spannuten 28 und Kühlmittelkanäle 30 in den Schneidenträger 16 eingeformt. Zu diesem Zweck wird der Schneidenträger 16 getrennt von dem Grundkörper 12 als gesondertes Formteil durch ein 3D-Formgebungsverfahren hergestellt, wie es nachstehend beschrieben wird.

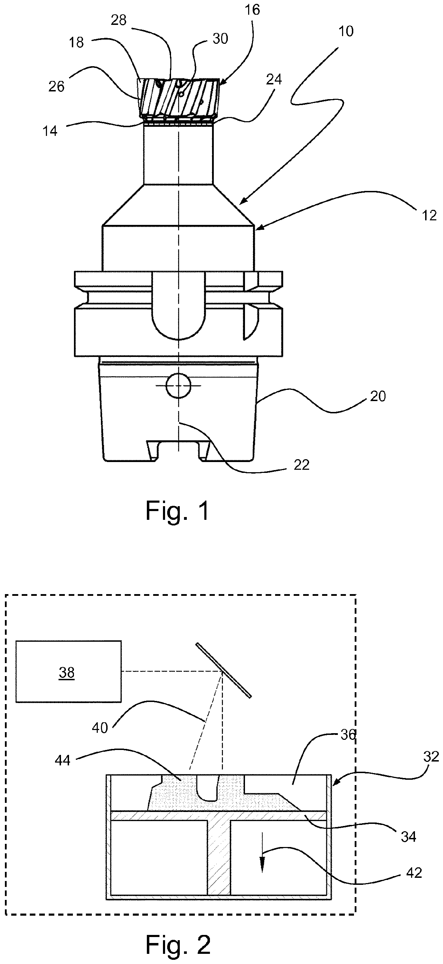

Fig. 2 veranschaulicht eine Fertigungsstation 32 zum selektiven Laserschmelzen des Schneidenträgers 16. Hierbei wird auf einer Bauplattform 34 eine dünne Schicht des zu verarbeitenden Werkstoffs in Form eines Pulvermaterials 36 aufgebracht. Hierfür kommt zweckmäßig Werkzeugstahl der Sorte 1.2709 zum Einsatz. Geeignete Schichtdicken liegen zwischen 10 - 200 µm, bevorzugt zwischen 10 - 55 µm. Danach wird das Pulvermaterial 36 mittels eines Lasers 38 lokal umgeschmolzen, so dass sich nach dem Erstarren eine feste Materialschicht bildet. Jede Schicht wird anhand von vorgegebenen 3D-CAD-Daten durch entsprechendes Abfahren mittels des Laserstrahls 40 generiert. Ist das Material erstarrt, wird die Bauplattform 34 um den Betrag der Schichtdicke in Richtung des Pfeils 42 abgesenkt und eine neue Schicht Pulver aufgetragen. Der Prozess erfolgt unter einer Schutzgasatmosphäre, so dass es zu keiner Kontamination mit Sauerstoff kommt. Auf diese Weise können Werkzeuge oder Formen entfallen, wobei der Formling 44 mit großer Geometriefreiheit herstellbar ist. Das selektive Laserschmelzen (SLM, Selective Laser Melting) ist somit ein additiver Prozess im Gegensatz zur subtraktiven zerspanenden Fertigung des Grundkörpers 12.

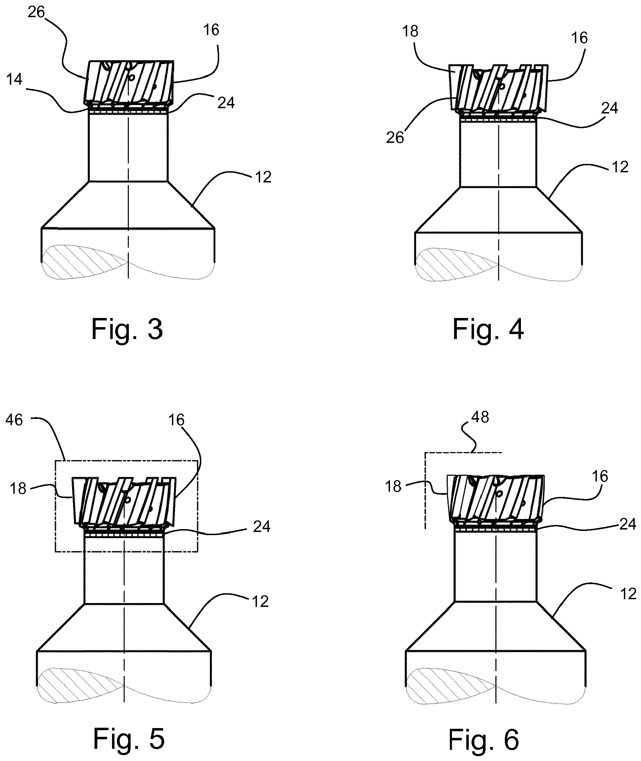

Der solchermaßen hergestellte Schneidenträger 16 wird anschließend in Hybridbauweise mit dem komplett fertig bearbeiteten Grundkörper 12 verbunden. Die einzelnen Fertigungsschritte dazu sind in Fig. 3 bis 6 illustriert.

Gemäß Fig. 3 wird die Schweißverbindung 24 durch Laserschweißen erzeugt. Der Wärmeeintrag ist bei diesem Verfahren minimal und lokal begrenzt. Somit wird eine Gefügeveränderung bzw. ein Härteverlust verhindert. Außerdem werden Spannungen im Bereich der Fügestelle 14 auf ein Mindestmaß reduziert. Wenn es die mechanische Beanspruchung des zu bildenden Werkzeuges zulässt, ist eine Schweißung ohne Zuführung von Schweißdraht zu bevorzugen, weil diese kostengünstig mit geringem Rüstaufwand teilautomatisiert hergestellt werden kann.

Gemäß der Erfindung und entsprechend Fig. 4 werden die Schneidelemente 18 in die Plattensitze 26 eingelötet. Diese können als PKD-Schneidplatten aus extrem hartem Werkstoff (Poly-Kristalliner Diamant) ausgebildet sein. Ebenso sind Schneiden aus CVD-Dickschichtdiamant, unterschiedlichen Keramiken, Hartmetall oder Cermet vorstellbar.

Fig. 5 veranschaulicht eine Wärmebehandlung, wobei im Wesentlichen der kopfseitige Werkzeugbereich 46 das Zielgebiet darstellt. Durch Aufheizen auf beispielsweise 500°C wird der Schneidenträger 16 auf seine Zielhärte gebracht. So wird ein Härteabfall im Bereich der Lötstelle der Schneidelemente 18 verhindert.
Die Wärmebehandlung nach dem Löten beseitigt eventuell aufgetretene Gefügespannungen. Ist der Härteabfall nicht relevant, kann das Einlöten der Schneidelemente 18 auch nach der Wärmebehandlung erfolgen.

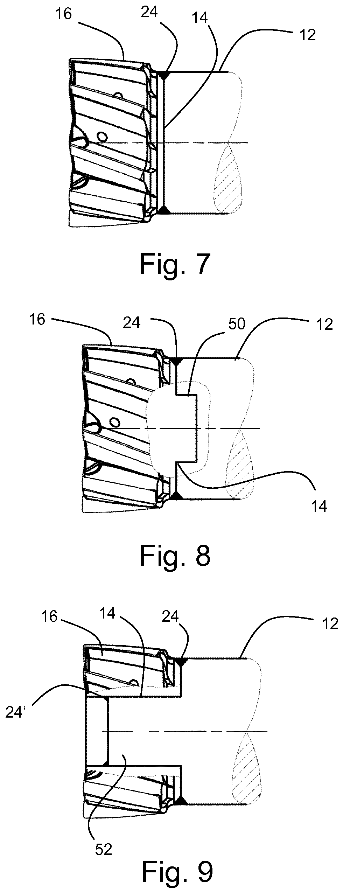

Danach werden die Schneidelemente 18 in ihre endgültige Form gebracht. Die Fertigbearbeitung erfolgt durch Schleifen, Erodieren oder Laserbearbeitung der Schneidkanten, wie es in Fig. 6 durch Linie 48 illustriert ist.
Die Form der Schweißverbindung 24 an der Fügestelle 14 muss in Abhängigkeit der zu erwartenden Zerspankräfte ausgewählt werden. In Fig. 7 bis 9 sind mögliche Formen dargestellt. Fig. 7 zeigt eine Stumpfschweißung in einer einzigen Schweißebene. Fig. 8 zeigt einen Bund 50 am Schneidenträger 16, ebenfalls mit einer Schweißverbindung 24 in einer Ebene.

Bei der Ausführungsform nach Fig. 9 ist ein Bund 52 am Grundkörper 12 ausgebildet, während der dazu komplementäre Schneidenträger 16 innen hohlzylindrisch ausgebildet ist. Grundsätzlich ist zum Laserschweißen eine solche Fügestelle 14 zu bevorzugen, weil hier das generativ zu fertigende Volumen am geringsten ist. Das spart Herstellkosten. Bei dieser Variante kann eine stirnseitige Schweißverbindung 24' auf einer zweiten Ebene von der innen offenen vorderen Stirnseite des Schneidenträgers 16 her eingebracht werden. So lässt sich das Verfahren auch bei Werkzeugen mit großen Zerspankräften anwenden.

## Patentansprüche

1. Verfahren zur Herstellung eines spanabhebenden Schneidwerkzeugs (10), bei welchem
- ein in einer Werkzeugmaschine aufnehmbarer, vorzugsweise aus einem Werkzeugstahl bestehender Grundkörper (12) durch Trennen, insbesondere Spanen in eine Endform gebracht wird,
- ein Schneidenträger (16) aus einem Pulvermaterial durch selektives Laserschmelzen generativ aufgebaut wird, wobei der Schneidenträger (16) separat von dem Grundkörper (12) auf einer Bauplattform (34) generativ vorgefertigt wird, und mindestens ein Spanraum (28) in den Schneidenträger (16) eingeformt wird, und
- anschließend der Schneidenträger (16) mit dem Grundkörper (12) an einer Fügestelle (14) durch Laserschweißen fest verbunden wird,
wobei :
- der Schneidenträger (16) mit mehreren Schneidelementen (18) versehen wird,
- wobei im Zuge der generativen Fertigung mehrere Plattensitze (26) in den Schneidenträger (16) eingeformt werden, und
- die Schneidelemente (18) auf die Plattensitze (26) des Schneidenträgers (16) aufgelötet werden.

2. Verfahren nach Anspruch 1, **dadurch gekennzeichnet, dass** der Schneidenträger (16) in Verbindung mit dem Grundkörper (12) einer Wärmebehandlung durch Aufheizen auf mindestens 400°C, vorzugsweise etwa 500°C unterzogen wird.

3. Verfahren nach Anspruch 1 oder 2, **dadurch gekennzeichnet, dass** die mit dem Schneidenträger (16) verbundenen Schneidelemente (18) insbesondere durch Schleifen, Erodieren oder Laserbearbeitung in eine vorgesehene Endform gebracht werden.

4. Verfahren nach einem der Ansprüche 1 bis 3, **dadurch gekennzeichnet, dass** der Schneidenträger (16) und/oder der Grundkörper (12) mit Formschlusselementen, insbesondere mit einem Bund (50,52) für einen Formschluss an der Fügestelle (14) versehen werden.

5. Verfahren nach einem der Ansprüche 1 bis 4, **dadurch gekennzeichnet, dass** der Schneidenträger (16) zumindest in einem dem Grundkörper (12) zugewandten Abschnitt innen hohlzylindrisch ausgebildet wird.

6. Verfahren nach einem der Ansprüche 1 bis 5, **dadurch gekennzeichnet, dass** der Schneidenträger (16) im Bereich von einer oder mehreren Schweißebenen mit dem Grundkörper (12) durch Laserschweißen fest verbunden wird.

7. Verfahren nach einem der Ansprüche 1 bis 6, **dadurch gekennzeichnet, dass** beim Laserschweißen an der Fügestelle (14) ein Schweißzusatzwerkstoff hinzugeführt wird.

8. Verfahren nach einem der Ansprüche 1 bis 7, **dadurch gekennzeichnet, dass** in den Schneidenträger (16) im Zuge der generativen Fertigung mindestens ein Kühlmittelkanal (30) eingeformt wird.

9. Verfahren nach einem der Ansprüche 1 bis 8, **dadurch gekennzeichnet, dass** eine Vielzahl von Schneidenträgern (16) in einer Losfertigung generativ aufgebaut wird.

10. Verfahren nach einem der Ansprüche 1 bis 9, **dadurch gekennzeichnet, dass** beim Laserschweißen ein Laserstrahl (40) entlang einer vorgegebenen Bahn geführt wird oder der Grundkörper (12) zusammen mit dem aufgesetzten Schneidenträger (16) relativ zu einem ortsfesten Laserstrahl gedreht wird.

11. Verfahren nach einem der Ansprüche 1 bis 10, **dadurch gekennzeichnet, dass** beim selektiven Laserschmelzen das Pulvermaterial (36) in übereinanderliegenden Schichten auf der Bauplattform (34) aufgebracht und schichtweise in einer vorgegebenen Bauteilgeometrie mittels Laserstrahlung umgeschmolzen wird.

12. Verfahren nach einem der Ansprüche 1 bis 11, **dadurch gekennzeichnet, dass** ein Schneidwerkzeug (10) ausgewählt aus der Gruppe Fräswerkzeug, Bohrwerkzeug, Aufbohrwerkzeug, Reibwerkzeug hergestellt wird.

13. Spanabhebendes Schneidwerkzeug mit einem durch Trennen, insbesondere Spanen in seine Endform gebrachten Grundkörper (12), der eine Schnittstelle (20) zur Aufnahme in einer Werkzeugmaschine aufweist, und einem aus einem Pulvermaterial durch selektives Laserschmelzen generativ aufgebauten Schneidenträger (16), wobei der separat von dem Grundkörper (12) generativ vorgefertigte Schneidenträger (16) mit dem Grundkörper (12) an einer Fügestelle (14) durch eine Laserschweißverbindung (24,24') fest verbunden ist, wobei der Schneidenträger (16) mit mehreren Schneidelementen (18) versehen ist, und dass die Schneidelemente (18) auf die im Zuge der generativen Fertigung eingeformten Plattensitze (26) des Schneidenträgers (16) aufgelötet sind.

## Claims

1. Method for producing a machining cutting tool (10), in which
- a main part (12) which can be received in a machine tool and is preferably made of a tool steel is brought into a final shape by cutting, in particular machining,
- a cutter holder (16) is additively built up from a powder material by selective laser melting, wherein the cutter holder (16) is additively prefabricated on a construction platform (34) separately from the main part (12), and at least one chip space (28) is formed in the cutter holder (16), and
- the cutter holder (16) is then rigidly connected to the main part (12) at a joint (14) by laser welding,
wherein:
- the cutter holder (16) is provided with a plurality of cutting elements (18),
- wherein a plurality of insert seats (26) are formed in the cutter holder (16) during the additive manufacturing process, and
- the cutting elements (18) are soldered onto the insert seats (26) of the cutter holder (16).

2. Method according to claim 1, **characterized in that** the cutter holder (16), when connected to the main part (12), is subject to heat treatment by being heated to at least 400°C, preferably approximately 500°C.

3. Method according to either claim 1 or claim 2, **characterized in that** the cutting elements (18) connected to the cutter holder (16) are brought into an intended final shape in particular by grinding, spark erosion or laser beam machining.

4. Method according to any of claims 1 to 3, **characterized in that** the cutter holder (16) and/or the main part (12) are provided with interlocking elements, in particular with a collar (50, 52) for an interlocking connection at the joint (14).

5. Method according to any of claims 1 to 4, **characterized in that** the cutter holder (16) is internally hollow cylindrical at least in a portion facing the main part (12).

6. Method according to any of claims 1 to 5, **characterized in that** the cutter holder (16) is rigidly connected to the main part (12) by laser welding in the region of one or more welding planes.

7. Method according to any of claims 1 to 6, **characterized in that** a welding filler material is added at the joint (14) during the laser welding.

8. Method according to any of claims 1 to 7, **characterized in that** at least one coolant channel (30) is formed in the cutter holder (16) during the additive manufacturing process.

9. Method according to any of claims 1 to 8, **characterized in that** a plurality of cutter holders (16) are additively built up in batch production.

10. Method according to any of claims 1 to 9, **characterized in that,** during the laser welding, a laser beam (40) is guided along a specified path or the main part (12) is rotated together with the attached cutter holder (16) relative to a fixed laser beam.

11. Method according to any of claims 1 to 10, **characterized in that,** during the selective laser melting, the powder material (36) is applied on the construction platform (34) in superposed layers and is remelted layer by layer in a predetermined component geometry by means of laser radiation.

12. Method according to any of claims 1 to 11, **characterized in that** a cutting tool (10) selected from the group including a milling tool, drilling tool, boring tool and reaming tool is produced.

13. Machining cutting tool comprising a main part (12) which is brought into its final shape by cutting, in particular machining, and has an interface (20) for being received in a machine tool, and comprising a cutter holder (16) built up additively from a powder material by selective laser melting, wherein the cutter holder (16), which is additively prefabricated separately from the main part (12), is rigidly connected to the main part (12) at a joint (14) by a laser welded connection (24, 24'), wherein the cutter holder (16) is provided with a plurality of cutting elements (18), and the cutting elements (18) are soldered onto the insert seats (26) of the cutter holder (16) that are formed during the additive manufacturing process.

## Revendications

1. Procédé de fabrication d'un outil de coupe (10) à enlèvement de copeaux, dans lequel
- un corps de base (12) pouvant être logé dans une machine-outil, de préférence constitué d'acier à outils, est amené à une forme finale par séparation, en particulier par usinage,
- un porte-lame (16) en matériau pulvérulent est réalisé de façon générative par fusion sélective au laser, le porte-lame (16) étant préfabriqué de façon générative sur une plate-forme de fabrication (34), séparément du corps de base (12), et au moins un espace à copeaux (28) étant moulé dans le porte-lame (16), et
- le porte-lame (16) est ensuite relié fixement au corps de base (12) au niveau d'un point d'assemblage (14) par soudage au laser,
- le porte-lame (16) étant pourvu d'une pluralité d'éléments de coupe (18),
- une pluralité de logements de plaquettes (26) étant moulée dans le porte-lame (16) pendant la fabrication générative, et
- les éléments de coupe (18) étant soudés sur les logements de plaquettes (26) du porte-lame (16).

2. Procédé selon la revendication 1, **caractérisé en ce que** le porte-lame (16) relié au corps de base (12) est soumis à un traitement thermique par chauffage à au moins 400 °C, de préférence à environ 500 °C.

3. Procédé selon la revendication 1 ou 2, **caractérisé en ce que** les éléments de coupe (18) reliés au porte-lame (16) sont amenés à leur forme finale prévue, en particulier par meulage, érosion ou traitement au laser.

4. Procédé selon l'une des revendications 1 à 3, **caractérisé en ce que** le porte-lame (16) et/ou le corps de base (12) sont pourvus d'éléments de liaison de forme, en particulier d'un collier (50, 52) pour une liaison de forme au niveau du point d'assemblage (14).

5. Procédé selon l'une des revendications 1 à 4, **caractérisé en ce que** le porte-lame (16) est réalisé de manière cylindrique creuse à l'intérieur au moins dans une section orientée vers le corps de base (12).

6. Procédé selon l'une des revendications 1 à 5, **caractérisé en ce que** le porte-lame (16) est fixement relié au corps de base (12) par soudage au laser dans la zone d'un ou de plusieurs plans de soudage.

7. Procédé selon l'une des revendications 1 à 6, **caractérisé en** qu'un matériau d'apport de soudage est ajouté au point d'assemblage (14) lors du soudage au laser.

8. Procédé selon l'une des revendications 1 à 7, **caractérisé en ce qu'**au moins un canal de refroidissement (30) est moulé dans le porte-lame (16) pendant la fabrication générative.

9. Procédé selon l'une des revendications 1 à 8, **caractérisé en ce qu'**une pluralité de porte-lames (16) est réalisée de façon générative dans une production par lots.

10. Procédé selon l'une des revendications 1 à 9, **caractérisé en ce que**, pendant le soudage au laser, un faisceau laser (40) est guidé le long d'une trajectoire prédéfinie ou le corps de base (12) tourne, conjointement avec le porte-lame (16) qui y est fixé, par rapport à un faisceau laser fixe.

11. Procédé selon l'une des revendications 1 à 10, **caractérisé en ce que**, pendant la fusion sélective au laser, le matériau pulvérulent (36) est appliqué sur la plate-forme de support (34) en couches superposées et est refondu en couches au moyen d'un rayonnement laser, dans une géométrie de composant prédéfinie.

12. Procédé selon l'une des revendications 1 à 11, **caractérisé en ce qu'**un outil de coupe (10) choisi dans le groupe constitué par un outil de fraisage, un outil de perçage, un outil d'alésage, un outil de friction est fabriqué.

13. Outil de coupe à enlèvement de copeaux, comportant un corps de base (12) amené à sa forme finale par séparation, en particulier par usinage, lequel corps de base présente une interface (20) pour le logement dans une machine-outil, et un porte-lame (16) réalisé de façon générative en un matériau pulvérulent par fusion sélective au laser, le porte-lame (16), préfabriqué de façon générative séparément du corps de base (12), étant relié fixement au corps de base (12) au niveau d'un point d'assemblage (14) par une liaison de soudage au laser (24,24'), le porte-lame (16) étant pourvu de plusieurs éléments de coupe (18), et les éléments de coupe (18) étant soudés sur les logements de plaquettes (26) du porte-lame (16), lesquels logements de plaquettes sont moulés pendant la fabrication générative.
